# FASCICULE DE BREVET EUROPEEN

(11) **EP 3 995 357 B1**
(45) Date de publication et mention de la délivrance du brevet: **28.01.2026**
(21) Numéro de dépôt: 21206010.7
(22) Date de dépôt: 02.11.2021
(51) Int. Cl.: B60N 2/60, B60N 2/24

(54) **HOUSSE POUR SIÈGE, SIÈGE ASSOCIÉ ET VÉHICULE COMPORTANT UN TEL SIÈGE**
HÜLLE FÜR SITZ, ENTSPRECHENDER SITZ UND FAHRZEUG, DAS EINEN SOLCHEN SITZ UMFASST
COVER FOR SEAT, ASSOCIATED SEAT AND VEHICLE COMPRISING SUCH A SEAT

(30) Priorité: 04.11.2020 FR 2011317
(43) Date de publication de la demande: 11.05.2022
(73) Titulaire: ALSTOM Holdings, 93400 Saint-Ouen-sur-Seine (FR)
(72) Inventeur: SCHRADER, Sarah, 75019 PARIS (FR); MILENOVICH, Sophie, 93450 L'ILE-SAINT-DENIS (FR); VERGNAUD, Loïc, 75018 PARIS (FR); DE-COLOMBEL, Bertrand, 75020 PARIS (FR); DREUX, Raoul, 72330 YVRE-LE-PÔLIN (FR)
(74) Mandataire: Plasseraud IP

(56) Documents cités:
- DE-A1- 102018 100 662
- US-A1- 2017 326 007
- US-A1- 2017 360 214
- US-A1- 2018 027 987
- US-A1- 2020 054 083

## Description

La présente invention concerne une housse destinée à recouvrir un siège. La présente invention concerne également un siège comportant une telle housse et un véhicule comportant un tel siège.

Des sièges destinés à être occupés successivement par des usagers différents sont utilisés dans de nombreux contextes, par exemple dans des véhicules de transport en commun tels que des trains ou des avions, ou encore dans des salles de spectacle, de cinéma ou de conférence.

US 2017/0326007 A1 décrit, par exemple, une housse de siège permettant l'immobilisation d'un patient dans le siège pour une extraction et un transport sécurisés. Cette housse comprend une pluralité de panneaux gonflables.

US 2018/0027987 A1 décrit une housse de siège jetable faite dans un matériau léger, jetable et biodégradable, qui résiste aux punaises de lit, poux, moisissures, champignons, et autres microorganismes.

Les sièges sont alors conçus de manière à présenter un niveau de confort acceptable pour les usagers prévus, et présentent des fonctions choisies pour répondre aux besoins de la majorité des usagers sans augmenter le prix ou la complexité des sièges par l'ajout de fonctions qui ne seraient utiles que pour une minorité d'usagers. Ainsi, le niveau de confort de chaque siège reste limité.

En particulier, la capacité du siège à soutenir la tête de l'usager est limitée, puisque l'appuie-tête du siège présente en général une géométrie simple. En effet, du fait que certains usagers peuvent vouloir un support minimal, les appuie-tête sont en général prévu pour fournir un simple appui à l'arrière de la tête.

En outre, le fait que des usagers successifs appuient leurs têtes sur le même appuie-tête peut permettre la transmission de maladie entre ces deux usagers. Puisque la probabilité de transmission augmente avec la surface de contact, et notamment augmente lorsque la peau elle-même est en contact avec l'appuie-tête et non seulement les cheveux, les appuie-tête sont également limités à la géométrie simple détaillée ci-dessus pour cette raison.

Il résulte de cette géométrie simple des appuie-tête que le confort proposé aux usagers reste sommaire, et notamment ne permet pas de dormir de manière agréable puisque la tête n'est alors pas soutenue.

Il existe donc un besoin pour un dispositif permettant d'améliorer le confort perçu par un usager du siège, notamment en termes de soutien de la tête, tout en permettant une hygiène améliorée.

A cet effet, il est proposé une housse selon la revendication 1.

Selon des modes de réalisation avantageux mais non obligatoires, la housse comporte une ou plusieurs des caractéristiques des revendications 2 à 5, prise(s) isolément ou selon toutes les combinaisons techniquement possibles.

Il est également proposé un siège, notamment un siège pour véhicule, comportant une housse telle que précédemment décrite.

Il est également proposé un véhicule de transport en commun comportant un siège tel que précédemment décrit.

Des caractéristiques et avantages de l'invention apparaîtront à la lecture de la description qui va suivre, donnée uniquement à titre d'exemple non limitatif, et faite en référence aux dessins annexés, sur lesquels :
[Fig 1] La figure 1 est une vue en perspective de deux sièges dont l'un est équipé d'une housse selon l'invention, et
[Fig 2] La figure 2 est un patron des différentes pièces composant la housse de la figure 1.

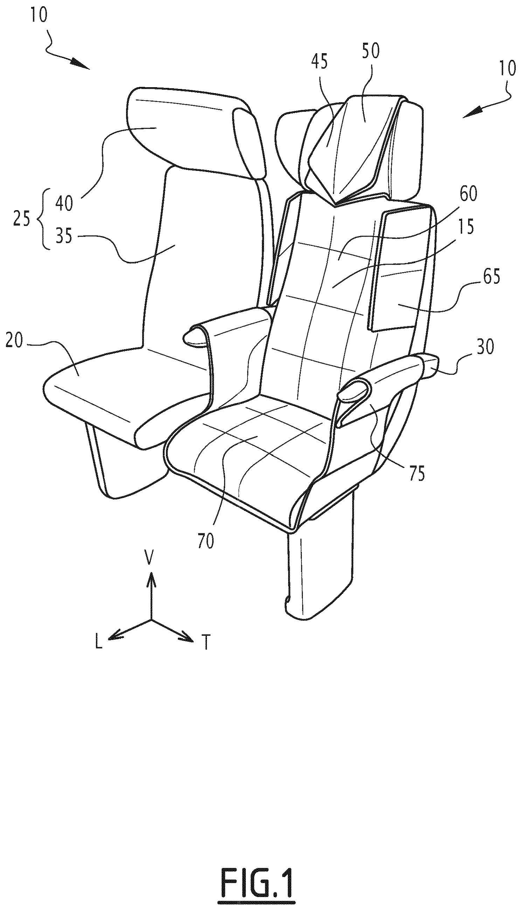

Deux sièges 10, dont un est équipé d'une housse 15, sont représenté sur la figure 1. Les deux sièges 10 sont, notamment, disposés côte-à-côte et font face dans la même direction.

Chaque siège 10 est configuré pour permettre à un usager de s'asseoir sur le siège 10. Par exemple, le siège 10 est propre à fournir un confort acceptable aux usagers même lorsqu'aucune housse 15 ne recouvre le siège 10.

Il est défini une direction longitudinale L, une direction verticale V et une direction transversale T pour chaque siège 10.

Il est défini un avant et un arrière pour la direction longitudinale L. L'usager assis sur le siège 10 fait face à l'avant du siège 10.

La direction longitudinale L est, par exemple, une direction horizontale.

La direction transversale T est une direction horizontale.

La direction transversale T est perpendiculaire à la direction longitudinale L.

La direction transversale T est, par exemple, la direction selon laquelle les épaules de l'usager assis sur le siège 10 et faisant face à l'avant s'étendent.

Chaque siège 10 est, par exemple, un siège d'un véhicule tel qu'un véhicule de transport en commun, notamment d'un train, d'un bus, d'un métro ou d'un tramway. En variante, chaque siège 10 est un siège d'un bâtiment tel qu'une salle de spectacle, de cinéma ou de conférence.

Chaque siège 10 comporte une assise 20, un dossier 25, et, par exemple, au moins un accoudoir 30.

L'assise 20 s'étend vers l'avant à partir du dossier 25.

L'assise 20 est configurée pour supporter un usager assis sur le siège 10. Par exemple, l'assise 20 comporte un coussin sur sa face supérieure.

Le dossier 25 est configuré pour permettre à un usager assis sur le siège 10 d'appuyer son dos et sa tête contre le dossier. Lorsque l'usager est assis sur le siège 10, le dossier 25 est disposé à l'arrière de l'usager.

Le dossier 25 comporte, par exemple, une portion principale 35 prévue pour que l'usager appuie son dos contre la portion principale 35, et un appuie-tête 40 s'étendant verticalement vers le haut à partir d'une extrémité supérieure de la portion principale 35.

Le dossier 25 s'étend à partir de l'assise 20 selon une direction d'extension du dossier 25.

La portion principale 35 et l'appuie-tête 40 comportent, notamment, chacun un coussin sur leur face avant respective, ainsi qu'un support ou une coque propre à soutenir le coussin et à apporter une rigidité mécanique à la portion principale 35 ou à l'appuie-tête 40.

Le ou chaque accoudoir 30 s'étend vers l'avant à partir du dossier 25.

Chaque accoudoir 30 est, par exemple, relié au dossier 25 par une liaison pivot configurée pour permettre à l'accoudoir 30 de pivoter entre une configuration abaissée dans laquelle l'accoudoir 30 est sensiblement horizontal et s'étend vers l'avant et une configuration relevée dans laquelle l'accoudoir 30 est sensiblement vertical.

La housse 15 est destinée à recouvrir un siège 10 correspondant. En particulier, la housse 15 est prévue pour être interposée entre le siège 10 et un usager assis sur le siège 10.

La housse 15 est amovible par rapport au siège 10. Le siège 10 est donc propre à remplir sa fonction de siège en l'absence de la housse 15.

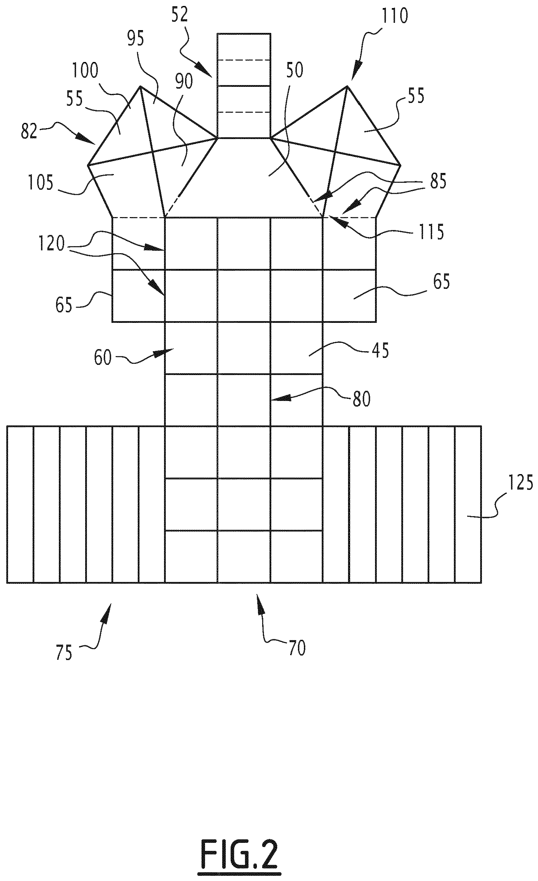

La housse 15 comporte un ensemble de panneaux 45, 90, 95, 100, 105, 125 reliés les uns aux autres et représentés en détails sur la figure 2.

La housse 15 est pliable sur elle-même entre une configuration dépliée, visible sur la figure 1, et une configuration repliée.

Sur la figure 2, qui est un patron de la housse 15, la housse 15 est dans la configuration dépliée et est représenté comme si elle reposait sur un support plat.

Lorsque la housse 15 est dans la configuration dépliée, la housse 15 est propre à recouvrir au moins partiellement le siège 10. En particulier, la housse 15, dans sa configuration dépliée, est configurée pour être interposée entre le siège 10 et l'usager assis sur le siège 10.

Lorsque la housse 15 est dans la configuration repliée, les panneaux 45, 90, 95, 100, 105, 125 sont rabattus les uns contre les autres.

La housse 15 comporte, en outre, des moyens pour maintenir la housse 15 dans la configuration repliée, tels que des sangles ou un sac propre à contenir la housse 15 dans la configuration repliée, et optionnellement une ou plusieurs poignées pour permettre à l'usager de transporter la housse 15 dans la configuration repliée.

La housse 15 comporte une portion d'appui 50, une portion arrière 52, deux premières portions latérales 55, une portion dorsale 60, au moins une deuxième portion latérale 65, notamment deux deuxièmes portions latérales 65, une portion d'assise 70 et au moins une portion d'accoudoir 75, notamment deux portions d'accoudoir 75.

Chacune de la portion d'appui 50, de la portion arrière 52, des premières portions latérales 55, la portion dorsale 60, la ou chaque deuxième portion latérale 65, la portion d'assise 70 et la ou chaque portion d'accoudoir 75 comporte un panneau 45, 90, 95, 100, 105, 125 ou plusieurs panneaux 45, 90, 95, 100, 105, 125 reliés les uns aux autres.

Chaque panneau 45, 90, 95, 100, 105, 125 est relié à au moins un autre panneau 45, 90, 95, 100, 105, 125. Chaque panneau 45, 90, 95, 100, 105, 125 est mobile par rapport à chaque autre panneau 45, 90, 95, 100, 105, 125.

L'ensemble de panneaux 45, 90, 95, 100, 105, 125 est, par exemple, formé par deux pièces de tissu superposées et fixées l'une à l'autre et par un matériau de rembourrage tel que de la ouate, le matériau de rembourrage étant enserré entre les deux pièces de tissu.

Chaque pièce de tissu est, par exemple, réalisée en un tissu plat à chaine et trame tel qu'un jacquart, en velours, en un textile enduit, en cuir, en feutre, en une maille 3D, ou encore en un non-tissé.

L'ensemble de panneaux comporte plusieurs types de panneaux différent les uns des autres par leur forme.

Par exemple, chaque panneau indiqué par une référence 45 est carré ou rectangulaire. En particulier, chaque panneau 45 présente une longueur de côté, comprise par exemple entre 10 et 20 centimètres (cm), notamment égale à 15 cm. Les panneaux 45 sont, par exemple, identiques les uns aux autres, mais peuvent en variante être différents.

Les panneaux 45, 90, 95, 100, 105, 125 sont, par exemple, délimités les uns des autres par des coutures 80. En particulier, chaque couture 80 permet aux deux panneaux 45, 90, 95, 100, 105, 125 délimités l'un de l'autre par la couture 80 de pivoter l'un par rapport à l'autre autour d'un axe confondu avec la couture 80.

Lorsque la housse 15 recouvre le siège 10, la portion d'appui 50 est configurée pour être interposée entre la tête de l'usager 10 et le dossier 25, notamment entre la tête de l'usager 10 et l'appuie-tête 40.

La portion d'appui 50 est formée, par exemple, par un unique panneau 50.

Lorsque la housse 15 est dans la configuration dépliée et repose sur un support plat, la portion d'appui 50 est interposée entre la portion arrière 52 et la portion dorsale 60. En particulier, la portion d'appui 50 est reliée conjointement à la portion arrière 52 et à la portion dorsale 60.

La portion d'appui 50 est, selon l'exemple représenté sur les figures, en forme de trapèze isocèle.

Les deux bases de la portion d'appui 50 délimitent, par exemple, la portion d'appui 50 selon la direction verticale V lorsque la housse 15 recouvre le siège 10.

En particulier, la portion d'appui 50 est telle que la plus grande des bases de la portion d'appui 50 est reliée à la portion dorsale 60 et la plus petite des bases de la portion d'appui 50 est reliée à la portion arrière 52.

Les angles aux extrémités de la grande base de la portion d'appui 50 sont, par exemple, compris entre 45 degrés (°) et 80°.

La longueur de la grande base de la portion d'appui 50 est, par exemple, comprise entre 40 cm et 50 cm, par exemple égale à 45 cm.

La longueur de la petite base de la portion d'appui 50 est, par exemple, comprise entre 10 cm et 20 cm, par exemple égale à 15 cm.

Les deux côtés de la portion d'appui 50 qui relient les deux bases entre elles délimitent la portion d'appui 50 selon la direction transversale T lorsque la housse 15 recouvre le siège 10 et sont appelés également « extrémités latérales ».

Il est à noter que la forme de la portion d'appui 50 est susceptible de varier.

La portion d'appui 50 présente, par exemple, une hauteur comprise entre 20 centimètres (cm) et 30 cm, mesurée selon la direction verticale V lorsque la housse 15 recouvre le siège 10.

La portion arrière 52 s'étend à partir de la portion d'appui 50, notamment à partir du sommet de la portion d'appui 50.

La portion arrière 52 est configurée pour être en contact avec une face arrière du dossier 25, notamment de l'appuie-tête 40, lorsque la housse 15 recouvre le siège 10.

La portion arrière 52 est, notamment, configurée pour coopérer avec la portion d'appui 50 pour enserrer l'appuie-tête 40 entre la portion d'appui 50 et la portion arrière 52. Par exemple, la portion arrière 52 comporte des moyens tels que des liens souples propres à être fixés à la portion d'appui 50 pour exercer sur la portion d'appui 50 une force tendant à rapprocher la portion d'appui 50 et la portion arrière 52.

La portion arrière 52 est, par exemple, formée par une pluralité de panneaux 45 rectangulaires, ces panneaux 45 étant par exemple disposés successivement le long d'une direction d'extension de la portion arrière 52.

Chaque première portion latérale 55 s'étend à partir d'une extrémité latérale de la portion d'appui 50.

En particulier, chaque première portion latérale 55 est délimitée de la portion d'appui 50 par une couture 80. Cette couture 80 présente, par exemple, une pince. En particulier, la couture 80 est configurée pour exercer sur la première portion latérale 55 une force tendant à ce que la première portion latérale 55 s'étende vers l'avant du siège 10 lorsque la portion d'appui 50 est interposée entre la tête de l'usager et l'appuie-tête 40.

Chaque première portion latérale 55 s'étend à partir de la portion d'appui 50 entre une extrémité fixe fixée à l'extrémité latérale de la portion d'appui 50 (cette extrémité fixe étant notamment matérialisée par la couture 80 délimitant la portion d'appui 50 et la première portion latérale 55) et une extrémité libre 82.

Selon l'exemple représenté sur les figures, la première portion latérale 55 comporte quatre panneaux 90, 95, 100 et 105 délimités les uns des autres par deux coutures 80 formant chacune une diagonale de la première portion latérale 55.

Trois des panneaux 90, 95, 100 et 105 de la première portion latérale 55, indiqués par les références 90, 95 et 100, sont des triangles isocèles. Les sommets principaux des panneaux 90, 95 et 100 sont, par exemple, confondus, et les bases des panneaux 90, 95 et 100 présentent notamment des longueurs identiques les unes aux autres. En particulier, l'angle au sommet principal de chaque panneau 90, 95, 100 est un angle droit, de sorte que les bases des panneaux 90, 95, 100 forment quatre côtés d'un carré. Le carré présente, par exemple, une longueur de côté comprise entre 40 centimètres (cm) et 70 cm.

Le quatrième panneau 105 est, par exemple, quadrilatéral. En particulier, deux des côtés du panneau 105 sont communs avec deux côtés respectifs des panneaux 90 et 100, un autre côté du panneau 105 étant parallèle à un côté d'une deuxième portion latérale 65 correspondante. Par exemple, cet autre côté est délimité de la deuxième portion latérale 65 correspondante par une couture 80 ou par une découpe 85.

Il est défini au moins une diagonale pour chaque première portion latérale 55. La diagonale est, par exemple, formée par les coutures délimitant respectivement le panneau 90 du panneau 95 et le panneau 105 du panneau 100. La première portion latérale 55 est configurée pour être repliée sur elle-même le long de la diagonale, de manière à mettre en appui le panneau 90 contre le panneau 95, et à mettre en appui le panneau 100 contre le panneau 105.

Les deux premières portions latérales 55 sont configurées pour que les extrémités libres 82 des deux premières portions latérales 55 soient mises en contact l'une de l'autre lorsque la tête de l'usager est en appui contre la portion d'appui 50. Dans cette configuration, la tête de l'usager est alors accueillie dans un volume délimité, dans un plan perpendiculaire à la direction verticale V, par les deux premières portions latérales 55 et par la portion d'appui 50.

En particulier, la housse 15 comporte des moyens de fixation des extrémités libres 82 l'une à l'autre lorsque la tête de l'usager est en appui contre la portion d'appui 50. Par exemple, les moyens de fixation sont propres à fixer l'une à l'autre les extrémités des diagonales le long desquelles chaque première portion latérale 55 est repliable.

Ainsi, les premières portions latérales 55, lorsqu'elles sont fixées l'une à l'autre, supportent la tête de l'usager, qui peut appuyer sa tête non seulement contre l'appuie-tête 40 situé derrière lui, mais aussi sur l'une ou l'autre des premières portions latérales 55.

Les moyens de fixation comportent, par exemple, un lien souple fixé à l'une des extrémités libres 82 et passant dans une boucle fixée à l'autre extrémité libre 82, ce lien souple étant par exemple élastique ou la boucle étant configurée pour libérer le lien souple si une force supérieure ou égale à un seuil est exercée sur le lien souple. En variante, la boucle est remplacée par un ensemble de boucles textiles coopérant avec un système de crochets fixés à l'extrémité du lien.

Chaque première portion latérale 55 comporte, en outre, des moyens tels qu'un lien souple, notamment une bride, de maintien de la première portion latérale 55 repliée sur elle-même. Ces moyens sont, notamment, propres à maintenir un coin de la première portion latérale 55, notamment le coin commun aux panneaux 95 et 100, fixé à une autre partie de la première portion latérale 55, notamment au coin opposé de la première portion latérale 55. Ces deux coins sont indiqués sur la figure 2 par des références 110 et 115, respectivement.

La portion dorsale 60 est configurée pour être interposée entre le dos de l'usager et la portion principale 35 du dossier 25 lorsque l'usager est assis sur le siège 10.

La portion dorsale 60 relie notamment la portion d'appui 50 à la portion d'assise 70.

La portion dorsale 60 est, par exemple, rectangulaire. Chaque côté de la portion dorsale 60 est, notamment parallèle ou perpendiculaire à la direction verticale V et à la direction transversale T.

La portion dorsale 60 comporte, par exemple, douze panneaux 45 disposés en quatre rangées de trois panneaux 45, ces rangées étant superposées selon la direction verticale V.

Chaque deuxième portion latérale 65 s'étend à partir d'une extrémité latérale de la portion dorsale 60, c'est-à-dire d'une des extrémités délimitant la portion dorsale 60 selon la direction transversale T.

Chaque deuxième portion latérale 65 est, par exemple, formée par deux panneaux 45 superposés selon la direction verticale V.

Chaque deuxième portion latérale 65 s'étend notamment vers l'avant du siège 10 lorsque la housse 15 recouvre le siège 10, comme visible sur la figure 1. Par exemple, chaque deuxième portion latérale 65 est délimitée de la portion dorsale 60 par une couture 120 présentant une pince et ainsi configurée pour exercer sur la deuxième portion latérale 65 une force tendant à faire s'étende la deuxième portion latérale 65 vers l'avant du siège 10.

Chaque deuxième portion latérale 65 s'étend, par exemple, vers le bas à partir de l'extrémité supérieure de la portion dorsale 60.

La portion d'assise 70 est prévue pour être interposée entre l'assise 20 et l'usager lorsque l'usager est assis sur le siège 10.

La portion d'assise 70 est, par exemple, carrée, notamment constituée de neuf panneaux 45.

La portion d'assise 70 est, notamment, configuré pour être fixée à l'assise 70, par exemple par une sangle entourant l'assise 20 pour plaquer la portion d'assise 70 contre l'assise 20.

Chaque portion d'accoudoir 75 est configurée pour entourer un accoudoir 30 correspondant. En particulier, chaque portion d'accoudoir 75 comporte un tube enfilé autour de l'accoudoir 30 lorsque la housse 15 recouvre le siège 10.

Chaque portion d'accoudoir 75 s'étend à partir d'une extrémité latérale de la portion d'assise 70.

Chaque portion d'accoudoir 75 est, par exemple, formée par un ensemble de panneaux 125, par exemple par six panneaux 125.

Chaque panneau 125 est, par exemple, rectangulaire.

Chaque panneau 125 présente une longueur, mesurée selon la direction longitudinale L lorsque la housse recouvre le siège 10, comprise entre 35 cm et 50 cm.

Chaque panneau 125 présente une largeur, mesuré selon une direction perpendiculaire à la direction longitudinale L, comprise par exemple entre 6 cm et 10 cm.

Les panneaux 125 sont séparés les uns des autres par des coutures 80 s'étendant selon la direction longitudinale L. Par exemple, chaque portion d'accoudoir 75 est formée par une unique portion rectangulaire de la housse 15 et délimitée en six panneaux 125 par cinq coutures 80.

Chaque portion d'accoudoir 75 est, par exemple, configurée pour que trois des panneaux 125 ou plus, ensemble, forment le tube prévu pour être enfilé sur l'accoudoir 30 correspondant. Par exemple, le panneau 125 le plus éloigné de la portion d'assise 70 est propre à être accroché à l'un des autres panneaux 125, par exemple par une sangle ou par un système d'accroche à base de boucles textiles et de crochets, pour former le tube avec ce panneau 125 et le ou les panneaux 125 les reliant entre eux.

La housse 15 permet à un usager du siège 10 d'y ajouter aisément une fonctionnalité supplémentaire de support de la tête, et ainsi d'améliorer le niveau de confort perçu. En particulier, les premières portions latérales 55 permettent à la tête de l'usager d'être mieux soutenue lorsque l'usager dort, par exemple, que ne le ferait le seul appuie-tête 40.

En outre, un appuie-tête fixe 40 qui remplirait la même fonction que les portions latérales 55 impliquerait un contact direct entre la peau de l'usager et l'appuie-tête 40, et augmenterait ainsi le risque de transmission de maladies.

Le fait que les portions latérales 55 puissent être repliées sur elles-mêmes permet à l'usager de choisir le niveau d'intimité fourni par ces portions latérales, niveau d'intimité qui est plus élevé lorsque la portion latérale 55 est dépliée mais obstrue la vision de l'usager. Les moyens de maintien de la portion latérale 55 repliée sur elle-même permettent alors d'assurer que la configuration retenue par l'usager est bien conservée. Pour cela, la fixation d'un coin de la portion latérale 55 à une autre partie de celle-ci permet de maintenir la portion latérale 55 efficacement repliée.

Les portions 60, 70 et 75 permettent également d'améliorer le niveau d'hygiène pour l'usager en limitant le contact entre l'usager et le siège 10. En outre, elles permettent également d'améliorer le confort perçu par l'usager du fait de leur rembourrage.

Des portions d'accoudoir 75 comportant des tubes à enfiler sur l'accoudoir 30 permettent une mise en place rapide et limitent le risque que l'accoudoir 30 soit exposé par une portion d'accoudoir 75 qui glisserait.

Les deuxièmes portions latérales 65 permettent d'éviter les chocs entre quelqu'un qui circulerait à proximité du siège 10, par exemple dans un couloir longeant le siège 10, et l'usager assis. Le confort perçu est donc amélioré, et les risques de contamination microbienne diminués.

## Revendications

1. Housse (15) amovible destinée à recouvrir un siège (10), notamment un siège (10) d'un véhicule de transport en commun, la housse (15) comportant un ensemble de panneaux (45, 90, 95, 100, 105, 125) reliés les uns aux autres et étant pliable sur elle-même entre une configuration dépliée et une configuration repliée, la housse (15) étant prévue pour être interposée entre le siège (10) et un usager du siège (10) lorsque la housse (15) est dans la configuration dépliée, la housse (15) étant prévue pour être pliée en rabattant les panneaux (45, 90, 95, 100, 105, 125) les uns contre les autres, la housse (15) comportant une portion d'appui (50) formée par un ou plusieurs panneau(x) de l'ensemble de panneaux (45, 90, 95, 100, 105, 125), la portion d'appui (50) étant configurée pour qu'un usager appuie sa tête contre la portion d'appui (50) lorsque l'usager est assis sur le siège (10),
la housse (15) comportant, en outre, deux premières portions latérales (55), chaque première portion latérale (55) comportant un ou plusieurs panneaux (90, 95 ,100, 105) de l'ensemble de panneaux (45, 90, 95, 100, 105, 125), chaque première portion latérale (55) s'étendant à partir d'une extrémité latérale respective de la portion d'appui (50) entre une extrémité fixe fixée à l'extrémité latérale et une extrémité libre (82), les deux premières portions latérales (55) comportant, en outre, des moyens de fixation des extrémités libres (82) des premières portions latérales (55) l'une à l'autre lorsque la housse (15) est dans la configuration dépliée, les premières portions latérales (55) étant, ensemble, configurées pour supporter la tête de l'usager lorsque les extrémités libres (82) sont fixées l'une à l'autre et l'usager est assis sur le siège (10) ;
chaque première portion latérale (55) étant apte à être repliée sur elle-même le long d'une diagonale de la première portion latérale (55) lorsque les extrémités libres (82) sont fixées l'une à l'autre;
la housse étant **caractérisée en ce qu'**elle est configurée pour recouvrir un siège (10) qui comporte un dossier (25), au moins un accoudoir (30) et une assise (20), la housse (15) comportant une portion dorsale (60) configurée pour être interposée entre le dos de l'usager et le dossier (25), une portion d'assise (70) configurée pour être interposée entre l'usager et l'assise (20) et au moins une portion d'accoudoir (75) configurée pour entourer un accoudoir (30) correspondant, la portion d'accoudoir (75) comportant un tube configuré pour être enfilé autour de l'accoudoir (30).

2. Housse selon la revendication 1, dans laquelle chaque première portion latérale (55) comporte des moyens de maintien de la première portion latérale (55) repliée sur elle-même.

3. Housse selon la revendication 2, dans lequel les moyens de maintien sont configurés pour fixer un coin (110) de la première portion latérale (55) considérée à une autre partie, notamment à un autre coin (115), de la première portion latérale (55) lorsque la première portion latérale (55) est repliée sur elle-même.

4. Housse selon l'une quelconque des revendications précédentes, dans laquelle l'ensemble de panneaux (45, 90, 95, 100, 105, 125) comporte deux couches de textile enserrant entre elles un matériau de rembourrage, notamment de la ouate, les panneaux (45, 90, 95, 100, 105, 125) étant délimités les uns des autres par des coutures (80, 120).

5. Housse selon l'une quelconque des revendications précédentes, dans laquelle la housse (15) est configurée pour recouvrir un siège (10) qui comporte un dossier (25), la housse (15) comportant une portion dorsale (60) configurée pour être interposée entre le dos de l'usager et le dossier (25), l'ensemble de panneaux (45, 90, 95, 100, 105, 125) comportant, en outre, au moins une deuxième portion latérale (65) s'étendant vers l'avant du siège (10) à partir d'une extrémité latérale respective de la portion dorsale (60) lorsque la housse (15) est dans la configuration dépliée.

6. Siège, notamment siège pour véhicule, comportant une housse (15) selon l'une quelconque des revendications précédentes.

7. Véhicule de transport en commun comportant un siège (10) selon la revendication précédente.

## Patentansprüche

1. Abnehmbare Hülle (15), welche dazu vorgesehen ist, einen Sitz (10) zu bedecken, insbesondere einen Sitz (10) eines öffentlichen Verkehrsmittels, wobei die Hülle (15) eine Anordnung von Paneelen (45, 90, 95, 100, 105, 125) umfasst, welche untereinander verbunden sind und aufeinander faltbar sind zwischen einer ausgefalteten und einer eingefalteten Konfiguration, wobei die Hülle (15) dazu vorgesehen ist, zwischen dem Sitz (10) und einem Benutzer des Sitzes (10) eingefügt zu sein, wenn die Hülle (15) in der ausgefalteten Konfiguration ist, wobei die Hülle (15) dazu vorgesehen ist, gefaltet zu werden, indem die Paneele (45, 90, 95, 100, 105, 125) gegeneinander angelegt werden, wobei die Hülle (15) einen Anlageabschnitt (50) umfasst, welcher durch ein oder mehrere Paneel(e) der Anordnung von Paneelen (45, 90, 95, 100, 105, 125) gebildet ist, wobei der Anlageabschnitt (50) dazu eingerichtet ist, dass ein Benutzer seinen Kopf gegen den Anlageabschnitt (50) anlegt, wenn der Benutzer auf dem Sitz (10) sitzt,
wobei die Hülle (15) ferner zwei erste laterale Abschnitte (55) umfasst, wobei jeder erste laterale Abschnitt (55) ein oder mehrere Paneele (90, 95, 100, 105) der Anordnung von Paneelen (45, 90, 95, 100, 105, 125) umfasst, wobei sich jeder erste laterale Abschnitt (55) ausgehend von einem entsprechenden lateralen Ende des Anlageabschnitts (50) zwischen einem festen Ende, welches an dem lateralen Ende befestigt ist, und einem freien Ende (82) erstreckt, wobei die beiden ersten lateralen Abschnitte (55) ferner Befestigungsmittel der freien Enden (82) der ersten lateralen Abschnitte (55) aneinander umfassen, wenn die Hülle in der ausgefalteten Konfiguration ist, wobei die ersten lateralen Abschnitte (55) gemeinsam dazu eingerichtet sind, den Kopf des Benutzers zu stützen, wenn die freien Enden (82) aneinander befestigt sind und der Benutzer auf dem Sitz (10) sitzt;
wobei jeder erste laterale Abschnitt (55) dazu in der Lage ist, auf sich entlang einer Diagonalen des ersten lateralen Abschnitts (55) eingefaltet zu werden, wenn die freien Enden (82) aneinander befestigt sind;
wobei die Hülle **dadurch gekennzeichnet ist, dass** sie dazu eingerichtet ist, einen Sitz (10) zu bedecken, welcher eine Rückenlehne (25), wenigstens eine Armlehne (30) und eine Sitzfläche (20) umfasst, wobei die Hülle (15) einen Rückenabschnitt (60) umfasst, welcher dazu eingerichtet ist, zwischen dem Rücken des Benutzers und der Rückenlehne (25) eingefügt zu sein, einen Sitzflächenabschnitt (70), welcher dazu eingerichtet ist, zwischen dem Benutzer und der Sitzfläche (20) eingefügt zu sein, sowie wenigstens einen Armlehnenabschnitt (75), welcher dazu eingerichtet ist, eine entsprechende Armlehne (30) zu umgeben, wobei der Armlehnenabschnitt (75) ein Rohr umfasst, welches dazu eingerichtet ist, um die Armlehne (30) aufgesteckt zu werden.

2. Hülle nach Anspruch 1, wobei jeder erste laterale Abschnitt (55) Mittel zum Halten des ersten lateralen Abschnitts (55) auf sich selbst eingefaltet umfasst.

3. Hülle nach Anspruch 2, wobei die Mittel zum Halten dazu eingerichtet sind, eine Ecke (110) des betrachteten ersten lateralen Abschnitts (55) an einem anderen Teil, insbesondere an einer anderen Ecke (115), des ersten lateralen Abschnitts (55) zu befestigen, wenn der erste laterale Abschnitt (55) auf sich selbst eingefaltet ist.

4. Hülle nach einem der vorhergehenden Ansprüche, wobei die Anordnung von Paneelen (45, 90, 95, 100, 105, 125) zwei Textilschichten umfasst, welche zwischen einander ein Polstermaterial umschließen, insbesondere Watte, wobei die Paneele (45, 90, 95, 100, 105, 125) durch Nähte (80, 120) voneinander abgegrenzt sind.

5. Hülle nach einem der vorhergehenden Ansprüche, wobei die Hülle (15) dazu eingerichtet ist, einen Sitz (10) zu bedecken, welcher eine Rückenlehne (25 umfasst, wobei die Hülle (15) einen Rückenabschnitt (60) umfasst, welcher dazu eingerichtet ist, zwischen dem Rücken des Benutzers und der Rückenlehne (25) eingefügt zu sein, wobei die Anordnung von Paneelen (45, 90, 95, 100, 105, 125) ferner wenigstens einen zweiten lateralen Abschnitt (65) umfasst, welcher sich zu der Vorderseite des Sitzes (10) ausgehend von einem entsprechenden lateralen Ende des Rückenabschnitts (60) erstreckt, wenn die Hülle (15) in der ausgefalteten Konfiguration ist.

6. Sitz, insbesondere für ein Fahrzeug, umfassend eine Hülle (15) nach einem der vorhergehenden Ansprüche.

7. Öffentliches Verkehrsmittel, umfassend einen Sitz (10) nach dem vorhergehenden Anspruch.

## Claims

1. Removable cover (15) intended to cover a seat (10), in particular a seat (10) of a public transport vehicle, the cover (15) including a set of panels (45, 90, 95, 100, 105, 125) connected to each other and being foldable on itself between an unfolded configuration and a folded configuration, the cover (15) being provided to be interposed between the seat (10) and a user of the seat (10) when the cover (15) is in the unfolded configuration, the cover (15) being provided to be folded by folding the panels (45, 90, 95, 100, 105, 125) against each other, the cover (15) including a support portion (50) formed by one or more panel(s) of the set of panels (45, 90, 95, 100, 105, 125), the support portion (50) being configured for a user to support his head against the support portion (50) when the user is seated on the seat (10),
the cover (15) also including two first side portions (55), each first side portion (55) including one or more panels (90, 95, 100, 105) from the set of panels (45, 90, 95, 100, 105, 125), each first side portion (55) extending from a respective lateral end of the support portion (50) between a fixed end attached to the lateral end and a free end (82), the two first side portions (55) also including means for fastening the free ends (82) of the first side portions (55) to each other when the cover (15) is in the unfolded configuration, the first side portions (55) together being configured to support the head of the user when the free ends (82) are fastened to each other and the user is seated on the seat (10);
each first side portion (55) being able to be folded onto itself along a diagonal of the first side portion (55) when the free ends (82) are attached to each other;
the cover being **characterised in that** it is configured to cover a seat (10) that includes a backrest (25), at least one armrest (30) and a seat (20), the cover (15) including a back portion (60) configured to be interposed between the back of the user and the backrest (25), a seat portion (70) configured to be interposed between the user and the seat (20) and at least one armrest portion (75) configured to surround a corresponding armrest (30), the armrest portion (75) including a tube configured to be threaded around the armrest (30).

2. Cover according to Claim 1, wherein each first side portion (55) includes means for holding the first side portion (55) folded onto itself.

3. Cover according to Claim 2, wherein the holding means are configured to secure a corner (110) of the respective first side portion (55) to another part, specifically to another corner (115), of the first side portion (55) when the first side portion (55) is folded onto itself.

4. Cover according to one of the preceding claims, wherein the set of panels (45, 90, 95, 100, 105, 125) includes two layers of textile enclosing between them a padding material, in particular wadding, the panels (45, 90, 95, 100, 105, 125) being delimited from each other by seams (80, 120).

5. Cover according to one of the preceding claims, wherein the cover (15) is configured to cover a seat (10) that includes a backrest (25), the cover (15) including a back portion (60) configured to be interposed between the back of the user and the backrest (25), the set of panels (45, 90, 95, 100, 105, 125) further including at least one second side portion (65) extending towards the front of the seat (10) from a respective lateral end of the back portion (60) when the cover (15) is in the unfolded configuration.

6. Seat, in particular vehicle seat, including a cover (15) according to any one of the preceding claims.

7. Public transport vehicle including a seat (10) according to the preceding claim.
